# EUROPÄISCHE PATENTANMELDUNG

(11) **EP 1 876 218 A1**
(43) Veröffentlichungstag der Anmeldung: **09.01.2008**
(21) Anmeldenummer: 06014150.4
(22) Anmeldetag: 07.07.2006
(51) Int. Cl.: C10L 5/44, B27N 1/00

(54) **Verfahren zum Herstellen von Pellets aus Holzspänen**

(71) Anmelder: Amandus Kahl GmbH & Co. KG, 21465 Reinbek (DE)
(72) Erfinder: Behrmann, Joachim, 21465 Wentorf (DE)
(74) Vertreter: Niebuhr, Heinrich

(57) **Zusammenfassung**

Das Verfahren zum Herstellen von Pellets aus Holzspänen mit Hilfe einer Pelletpresse zeichnet sich dadurch aus, dass unmittelbar vor dem Pelletieren oder während des Pelletierens die Holzspäne mit 0,1 Gew.-% bis 1 Gew.-% einer Reibung vermindernden Flüssigkeit besprüht werden.

## Beschreibung

Die Erfindung betrifft ein Verfahren zum Herstellen von Pellets aus Holzspänen mit Hilfe einer Pelletpresse.

Pellets aus Holzspänen finden in der letzten Zeit immer größere Verbreitung. Sie sind für verschiedene Zwecke verwendbar, bieten aber insbesondere als Brennstoff große Vorteile. Einerseits wird der CO₂-Haushalt der Atmosphäre nicht gestört, wenn der nachwachsende Rohstoff Holz verbrannt wird. Andererseits ist die Verwendung von Holzpellets als Brennstoff in Folge anwachsender Ölpreise auch wirtschaftlich immer interessanter.

Als Rohstoff dienen einerseits Holzspäne, die in Sägewerken, bei Hobelmaschinen und dergleichen in großen Mengen anfallen und bei gewissen Anwendungen über 50% des Holzes ausmachen, das bearbeitet wird. Andererseits lohnt es sich aber auch, Holz zu Holzspänen zu zerkleinern, was vorteilhafterweise in einer Hammermühle geschieht. Dabei kann nicht nur frisches Holz aus dem Wald, sondern auch Altholz verwendet werden, soweit dieses nicht mit Schadstoffen belastet ist.

In der Pelletpresse werden die Holzspäne auf eine mit Bohrungen versehene Matrize aufgebracht, auf der Kollerrollen abrollen und die Holzspäne entgegen der Reibung in den Bohrungen durch die Bohrungen hindurch drücken. Aufgrund der Reibung und des dadurch verursachten Druckes werden die Holzspäne verfestigt. Man erhält so im Wesentlichen zylinderförmige Pellets, die beim Austreten aus der Matrize noch durch ein umlaufendes Messer in ungefähr gleich lange Stücke zerschnitten werden können. Die Holzpellets haben dabei aufgrund des in ihnen enthaltenen Harzes und des Lignins eine ausreichende Festigkeit, so dass sie als Schüttgut dem Kunden durch Schläuche oder Rohrleitungen aus entsprechenden Fahrzeugen geliefert werden können.

An die Qualität der Pellets werden dabei große Anforderungen gestellt. Ein Nachteil besteht in der verhältnismäßig großen Energiemenge, die aufgewendet werden muss, um das Material gegen die Reibung durch die Bohrungen der Matrizen zu drücken. Bei einer vorbekannten Anlage, die bis zu 5 Tonnen pro Stunde verarbeitet, muss mit einem Energieaufwand von 50 bis 60 kWh pro Tonne gerechnet werden.

Die Aufgabe der Erfindung besteht in der Schaffung eines Verfahrens, mit dem die Pellets mit geringerem Energieaufwand hergestellt werden können.

Die erfindungsgemäße Lösung besteht darin, dass unmittelbar vor dem Pelletieren oder während des Pelletierens die Holzspäne mit 0,1 Gew.-% des 1 Gew.-% einer Reibung vermindernden Flüssigkeit besprüht werden. Durch die Flüssigkeit wird dabei die Reibung zwischen Kollerrollen und Matrize und die Reibung des Materials in den Bohrungen der Matrize verringert. Zusatzstoffe in Form dieser Flüssigkeit dürfen einerseits aus Kostengründen und andererseits, um nicht die Brenneigenschaften negativ zu beeinflussen, nur in verhältnismäßig geringen Mengen hinzugefügt werden. Erfindungsgemäß wird die Flüssigkeit unmittelbar vor dem Pelletieren oder während des Pelletierens zugefügt, so dass sie sich auf der Oberfläche absetzt und keine Zeit hat, in die Holzspäne hineinzuwandern. Es steht also praktisch die gesamte Flüssigkeit an den Oberflächen der Holzspäne zur Verfügung, um die Reibung zu vermindern.

Es versteht sich, dass die Flüssigkeit gleichmäßig aufgebracht werden muss. Dies kann z. B. mit Hilfe eines Systems erfolgen, das von der Anmelderin unter der Bezeichnung Rotospray vertrieben wird. Es handelt sich dabei um einen Zerstäuber, mit dem die Flüssigkeit in sehr kleine Tröpfchen vernebelt wird. Es können aus 1 ml Flüssigkeit dabei ungefähr 10.000.000 Tröpfchen erzeugt werden. Durch einen so erzeugten Nebel fallen dann die Holzspäne, so dass sich die Flüssigkeitströpfchen an der Oberfläche der Holzspäne absetzen können. Dies geschieht wie gesagt unmittelbar vor dem Pelletieren, so dass die Holzspäne sofort, noch bevor die Flüssigkeit in sie hinein diffundieren kann, in der Pelletpresse zu Pellets verarbeitet werden. Andererseits ist es auch möglich, die Flüssigkeit insbesondere durch einen Düsenkranz in der Presse selbst zu versprühen.

Bei einer vorteilhaften Ausführungsform werden die Holzspäne mit Wasser besprüht. Die verhältnismäßig geringe Wassermenge erhöht dabei die Feuchtigkeit der Pellets nicht wesentlich.

Ganz besonders vorteilhaft ist es aber, wenn die Holzspäne mit Öl besprüht werden. Öl hat selbstverständlich wesentlich bessere Gleiteigenschaften als Wasser. Tatsächlich lässt sich durch die Verwendung von Öl der Energieverbrauch besonders stark senken. Als Öl könnten z. B. Mineralöle verwendet werden, die aber möglicherweise den Nachteil haben, Schadstoffe wie Schwefel zu enthalten, die verunreinigte Rauchgase ergeben. Als besonders vorteilhaft hat es sich daher erwiesen, Pflanzenöle, insbesondere Speiseöle zu verwenden.

Eine besonders vorteilhafte Dosierung geschieht dabei mit ungefähr 0,2 bis 0,7 Gew.-% an Flüssigkeit. Als ganz besonders vorteilhaft hat sich dabei 0,5 Gew.-% der Flüssigkeit erwiesen.

Vorteilhafterweise werden die Holzspäne vor dem Pelletieren konditioniert. So ist es einerseits zweckmäßig, sie auf einen Feuchtigkeitsgehalt von 10 bis 15% zu bringen. Dies geschieht bei frischem Holz durch Lagern oder in Trocknern. Ist das Holz zu trocken, so kann es mit bekannten Techniken befeuchtet werden.

Um gleichmäßige Pellets zu erhalten, ist es besonders vorteilhaft, wenn die Holzspäne vor dem Pelletieren auf gleichmäßige Temperatur und Feuchtigkeit gebracht werden. Die Einstellungen der Pelletpresse (z. B. Geschwindigkeit und ausgeübter Druck) hängen zum Teil von der Temperatur und der Feuchtigkeit des Materials ab, so dass ungleichförmige Pellets auftreten können, wenn das Rohmaterial nicht vorher homogen gemacht worden ist.

Aus dem gleichen Grund ist es auch besonders vorteilhaft, wenn sortenreine Holzspäne verwendet werden. So erfordern Harthölzer wie Buche oder Eiche z. B. höhere Presskräfte als Weich- oder Nadelhölzer.

Vorteilhafterweise sollten für die Pelletierung in Größe und Form homogene Holzspäne verwendet werden.

Zweckmäßigerweise werden vor dem Pelletieren Fremdkörper aus den Holzspänen entfernt. Dies kann durch Magnetabscheider, Steinfallen und dergleichen geschehen. Auf diese Weise wird vermieden, dass die Pelletpresse durch diese Fremdkörper beschädigt wird und der Betrieb unterbrochen wird.

Es hat sich als besonders vorteilhaft erwiesen, Holzspäne mit einer Größe von weniger als 5 mm, insbesondere weniger als 4 mm zu verwenden. Den Holzspänen können aber Teilchen wesentlich kleiner Größe zumindest als Beigabe zugemischt werden, z. B. Holzstaub, der bei den Bearbeitungsvorgängen entsteht und in Zyklonabscheidern gesammelt wird.

Es hat sich als zweckmäßig erwiesen, wenn den Holzspänen vor dem Pelletieren Stärke, insbesondere Kartoffel- oder Maisstärke hinzugefügt wird. Dies muss aber nicht, im Gegensatz zur erfindungsgemäßen Flüssigkeitszugabe, unmittelbar vor dem Pelletieren erfolgen. Durch die Zugabe von Stärke wird nicht nur der Pelletiervorgang verbessert. Wesentlich ist noch, dass der Abrieb der fertigen Pellets verringert wird. Die Späne halten zwar schon allein durch die beim Pressen weich werdenden holzeigenen Lignine und Harze zusammen. Dies wird aber durch die Zufügung von Stärke, die allerdings weniger als 2 Gew.-% betragen sollte, noch verbessert. Auf diese Weise überstehen die Pellets besser Vorgänge wie z. B. das Einblasen der Pellets in den Vorratsbehälter der Kunden.

Als sehr vorteilhaft hat es sich erwiesen, wenn die Pellets in einer Pelletpresse hergestellt werden, die Kollerrollen mit auf ihrer Umfangsfläche schräg zur Axialrichtung verlaufenden Nuten aufweist. Dies führt zu einer besseren Verteilung der Holzspäne über die Matrize, so dass tatsächlich aus allen Bohrungen gleichmäßig die gepressten Stränge austreten.

Das Verfahren der Erfindung kann sowohl in Pelletpressen, bei denen die Kollerrollen auf einer ebenen Matrize abrollen (Flachmatrizenpressen) als auch in Pelletpressen verwendet werden, in denen die Kollerrollen auf zylinderförmigen Matrizen abrollen (Ringmatrizenpressen). In beiden Fällen erhält man die besonderen Vorteile, insbesondere die Energieeinsparung.

Es wurden von der Anmelderin umfangreiche Versuche unternommen, bei denen auch der Einfluss der Form der Nuten auf den Kollerrollen, der Teilchengröße, der Geschwindigkeit der Kollerrollen usw. untersucht wurden. Eine typische Messung ergab dabei bei ansonsten gleichen Bedingungen folgende Werte. Wurden die Holzspäne ohne Zusätze zu Pellets verarbeitet, so war hierfür eine Energie von 64 kWh pro Tonne Material erforderlich. Wurde mit dem bereits erwähnten Sprühgerät "Rotospray" der Anmelderin das zu verpressende Material unmittelbar vor der Pelletpresse mit 0,5 Gew.-% Wasser besprüht, so war für die Verpressung nur noch eine Energie von 62 kWh pro Tonne erforderlich. Eine ganz wesentliche Verbesserung ergab sich aber, wenn die Holzspäne unmittelbar vor dem Pressen mit 0,5 Gew.-% Öl besprüht wurden. In diesem Falle musste nur noch eine Energie von 52 kWh pro Tonne aufgewendet werden.

Durch die Erfindung kann also ein kostengünstiges Heizmaterial hergestellt werden. Die fertigen Pellets lassen sich dabei ähnlich wie Öl durch Rohrleitungen fördern und in Haushaltsheizungen und industriellen Heizungen verwenden.

## Patentansprüche

1. Verfahren zum Herstellen von Pellets aus Holzspänen mit Hilfe einer Pelletpresse, **dadurch gekennzeichnet, dass** unmittelbar vor dem Pelletieren oder während des Pelletierens die Holzspäne mit 0,1 Gew.-% bis 1 Gew.-% einer Reibung vermindernden Flüssigkeit besprüht werden.

2. Verfahren nach Anspruch 1, **dadurch gekennzeichnet, dass** die Holzspäne mit Wasser besprüht werden.

3. Verfahren nach Anspruch 1 oder 2, **dadurch gekennzeichnet, dass** die Holzspäne mit Öl besprüht werden.

4. Verfahren nach einem der Ansprüche 1 bis 3, **dadurch gekennzeichnet, dass** die Holzspäne mit 0,2 bis 0,7 Gew.-% der Flüssigkeit besprüht werden.

5. Verfahren nach einem der Ansprüche 1 bis 4, **dadurch gekennzeichnet, dass** die Holzspäne mit 0,5 Gew.-% der Flüssigkeit besprüht werden.

6. Verfahren nach einem der Ansprüche 1 bis 5, **dadurch gekennzeichnet, dass** die Holzspäne vor dem Pelletieren durch Trocknen oder Befeuchten auf einen Feuchtigkeitsgehalt von 10 bis 15 Gew.-% gebracht werden.

7. Verfahren nach einem der Ansprüche 1 bis 6, **dadurch gekennzeichnet, dass** die Holzspäne vor dem Pelletieren auf gleichmäßige Temperatur und Feuchtigkeit gebracht werden.

8. Verfahren nach einem der Ansprüche 1 bis 7, **dadurch gekennzeichnet, dass** sortenreine Holzspäne verwendet werden.

9. Verfahren nach einem der Ansprüche 1 bis 8, **dadurch gekennzeichnet, dass** in Größe und Form homogene Holzspäne verwendet werden.

10. Verfahren nach einem der Ansprüche 1 bis 9, **dadurch gekennzeichnet, dass** vor dem Pelletieren Fremdkörper aus den Holzspänen entfernt werden.

11. Verfahren nach einem der Ansprüche 1 bis 10, **dadurch gekennzeichnet, dass** Holzspäne mit einer Größe von weniger als 5 mm verwendet werden.

12. Verfahren nach einem der Ansprüche 1 bis 11, **dadurch gekennzeichnet, dass** den Holzspänen vor dem Pelletieren Stärke, insbesondere Kartoffel- oder Maisstärke hinzugefügt wird.

13. Verfahren nach einem der Ansprüche 1 bis 12, **dadurch gekennzeichnet, dass** die Pellets in einer Pelletpresse hergestellt werden, die Kollerrollen mit auf ihrer Umfangsfläche schräg zur Axialrichtung verlaufenden Nuten aufweist.

14. Verfahren nach einem der Ansprüche 1 bis 13, **dadurch gekennzeichnet, dass** eine Flachmatrizenpresse verwendet wird.

15. Verfahren nach einem der Ansprüche 1 bis 13, **dadurch gekennzeichnet, dass** eine Ringmatrizenpresse verwendet wird.
